# EUROPEAN PATENT SPECIFICATION

(11) **EP 0 398 716 B1**
(45) Date of publication and mention of the grant of the patent: **10.01.1996**
(21) Application number: 90305336.1
(22) Date of filing: 17.05.1990
(51) Int. Cl.: C09B 67/22

(54) **Pigment composition**
Pigmentzusammensetzung
Composition pigmentaire

(30) Priority: 19.05.1989 JP 127699/89
(43) Date of publication of application: 22.11.1990
(73) Proprietor: TOYO INK MANUFACTURING CO., LTD., Tokyo (JP)
(72) Inventor: Tsuchida, Junichi, c/o Toyo Ink. Man. Co., Ltd., Tokyo (JP); Shirao, Masami, c/o Toyo Ink. Man. Co., Ltd., Tokyo (JP); Hikosaka, Michichika, c/o Toyo Ink. Man. Co., Ltd., Tokyo (JP); Nonaka, Yoshiyuki, c/o Toyo Ink. Man. Co., Ltd., Tokyo (JP)
(74) Representative: Woods, Geoffrey Corlett

(56) References cited:
- DE-B- 1 095 430
- DE-B- 1 187 219
- US-A- 2 192 704
- US-A- 2 713 005
- CHEMICAL ABSTRACTS, vol. 102, no. 4, January 1985, page 102, abstract no. 26484k, Columbus, Ohio, US;

## Description

This invention relates to a pigment composition which comprises a highly halogenated copper phthalocyanine widely used as a green pigment, and which is capable of giving a pigment dispersion in which the suitabilities of the highly halogenated copper phthalocyanine in use, fluidity in particular, are improved. More specifically, it relates to a pigment composition which comprises a highly halogenated copper phthalocyanine produced by halogenation of copper phthalocyanine in the presence of chlorosulfonic acid or titanium tetrachloride by halogenation of a copper phthalocyanine in a powder solid state, or by cyclization, and which is capable of giving a pigment dispersion of which the suitabilities in use, fluidity in particular, are improved.

### Prior Art of the Invention

Highly halogenated copper phthalocyanine has been widely used in pigments for use in various purposes due to its excellence in color tone and various resistances. However, it is still unsatisfactory for use in some purposes.

That is, in general, highly halogenated copper phthalocyanine has an extremely fine particle diameter, and it has hence a defect in that it tends to form an aggregate, one of the major defects attributable to the extreme fineness. This tendency becomes conspicuous when it is used in a non-aqueous dispersion system such as a coating composition, gravure ink, or the like. As a result of the pigment aggregation, the system exhibits high structural viscosity in fluidity, and sometimes causes problems in practical use, such as gelation, etc.

Meanwhile, in production of halogenated copper phthalocyanine, there are known a process using aluminum chloride sodium chloride eutectic salt, chlorosulfonic acid or titanium tetrachloride or an organic solvent, a process using copper phthalocyanine in a solid powder state and a process using a cyclization-condensation reaction of halogenated phthalimide, etc. Pigments produced by these processes other than the method using aluminum chloride eutectic salt exhibit particularly high structural viscosity as compared with those obtained by the process using aluminum chloride, and improvement thereof has been greatly desired.

Some proposals have been hitherto made in order to overcome the above defect. For example, U.S. Patent 3,891,455 and U.S. Patent 4,088,507 describe processes in which a blue-colored copper phthalocyanine derivative is mixed with highly halogenated copper phthalocyanine. These processes, however, involve a defect that the resultant pigment exhibits a bluish tint in hue, although the fluidity of the pigment dispersion system is improved. In order to overcome this defect of bluish tint in hue and obtain excellent gloss and low viscosity, Japanese Laid-Open Patent Publication No. 168070/1984 and Japanese Patent Publication No. 4143/1965 propose processes which comprise incorporating a halogenated copper phthalocyanine derivative into highly halogenated copper phthalocyanine. However, the above defect of bluish tint in hue has not yet been satisfactorily overcome.

DE-B-1187219 discloses a process for the production of a greenish copper phthalocyanine pigment by adding a small amount of aluminium phthalocyanine to monochloro-copper phthalocyanine, and dissolving and recrystallising in sulphuric acid.

DE-B-1095430 discloses a method of stabilising a crystal pigment by treating the crystal with sulphuric acid after adding copper phthalocyanine to aluminium phthalocyanine.

It is an object of this invention to provide a pigment composition capable of giving a pigment dispersion having excellent suitability in use, excellent fluidity in particular.

It is another object of this invention to provide a pigment composition capable of giving a pigment dispersion which is free from the bluish tint and has improved fluidity.

It is further another object of this invention to provide a pigment composition capable of giving a pigment dispersion having high gloss and high coloring power.

It is still another object of this invention to provide a pigment composition capable of giving a pigment dispersion having excellent fluidity whether the vehicle therefor is nonaqueous or aqueous.

According to this invention, there is provided a pigment composition comprising 100 parts by weight of at least one highly halogenated copper phthalocyanine selected from the group consisting of a highly halogenated copper phthalocyanine prepared by halogenation of copper phthalocyanine in the presence of a chlorosulfonic acid, titanium tetrachloride or a mixture of titanium tetrachloride with aluminium choride, a highly halogenated copper phthalocyanine prepared by halogenation of copper phthalocyanine in a solid powder state and a highly halogenated copper phthalocyanine prepared by a cyclization-condensation reaction, and 0.3 to 30 parts by weight of a highly halogenated aluminum phthalocyanine.

### Detailed Description of the Invention

This invention has been made on the basis of the following finding. That is, a pigment having improved fluidity can be obtained, unexpectedly without impairing the hue, by incorporating a certain amount of a highly halogenated aluminum phthalocyanine into a highly halogenated copper phthalocyanine such as those prepared by halogenation of copper phthalocyanine in the presence of a chlorosulfonic acid, titanium tetrachloride or a mixture of titanium tetrachloride with aluminium chloride, by halogenation of copper phthalocyanine in a solid powder state and by a cyclization-condensation reaction.

The highly halogenated aluminum phthalocyanine in this invention is preferably a compound having the following structural formula (I).

R₁ -AℓPcXₙ (I)

wherein PcXₙ represents a halogenated phthalocyanine moiety in which X denotes a chlorine or bromine atom and n denotes an integer of from 8 to 16, and R₁ represents -Cl, -OH, -SO₃H or -SO₃C₆H₃ (R₂)R₃ in which each of R₂ and R₃, independently of the other, denotes a hydrogen atom, an alkyl group having 1 to 18 carbon atoms, a nitro group, a sulfone group or a halogen atom.

In the above formula (I), R₁ is usually -Cl immediately after a highly halogenated aluminum phthalocyanine is synthesized. And, R₁ is mostly -OH when the highly halogenated aluminum phthalocyanine is post-treated with an alkali, -SO₃H when it is post-treated with sulfuric acid, and -SO₃C₆H₃(R₂)R₃ when HSO₃C₆H₃(R₂) R₃ is added in the posttreatment with sulfuric acid. Highly halogenated aluminum phthalocyanines having these structural formulae may be used alone or in combination.

In this invention, the highly halogenated aluminum phthalocyanine is synthesized, in general, by the following two processes.

The first process is carried out by synthesizing an aluminum phthalocyanine and then halogenating the synthesized aluminum phthalocyanine according to known processes. The process for the aluminum phthalocyanine synthesis is described, for example, in "The Phthalocyanines" Moser, F.H. and Thomas, A.L., CRS Press Inc., 1983. The halogenation is carried out by a process using an aluminum chloride-sodium chloride eutectic salt as a solvent and the aluminium phtalocyanine as a material according to the halogenation process described in U.S. Patent 4,067,881, by a process using chlorosulfonic acid as a solvent as described in U.S. Patent 2,662,085, by a process using titanium tetrachloride as a solvent, or by some other method.

The second process is carried out by dissolving copper phthalocyanine in a hot aluminum chloride-sodium chloride eutectic salt and at the same time, replacing copper, i.e. the central metal, with aluminum to obtain aluminum phthalocyanine partially, and then halogenating the mixture of the aluminum phthalocyanine with the copper phthalocyanine.

In this invention, the "highly halogenated copper or aluminum phthalocyanine" means a halogenated copper or aluminum phthalocyanine in which at least eight halogen atoms, preferably not less than 12 halogen atoms, of chlorine and/or bromine atoms are substituted.

The highly halogenated aluminum phthalocyanine and the highly halogenated copper phthalocyanine, which are prepared as described above, can be mixed in a dry powder, cake or slurry state. These two phthalocyanines may be also mixed with each other when they are treated with concentrated sulfuric acid or some other solvent, or when components for a pigment kneaded with mechanical energy as is done for the formation of usual pigments. Further, the highly halogenated copper phthalocyanine and the highly halogenated aluminum phthalocyanine may be prepared separately, and then incorporated when a coating composition, printing ink, etc., are produced.

The amount of the highly halogenated aluminum phthalocyanine is 0.3 to 30 parts by weight, preferably 3 to 10 parts by weight based on 100 parts by weight of the highly halogenated copper phthalocyanine. When the amount of the highly halogenated aluminum phthalocyanine is less than 0.3 part by weight, the resultant pigment composition does not exhibit any practical effect. When this amount exceeds 30 parts by weight, the alkali resistance, acid resistance and weatherability are reduced. In this connection, if the mixture of the highly halogenated copper phthalocyanine with the highly halogenated aluminum phthalocyanine obtained in the above second process is used, it is necessary to determine the aluminum replacement ratio in advance, and the resultant hue is less vivid. For these reasons, the first process is advantageous.

Examples of the highly halogenated copper phthalocyanine used in this invention are highly chlorinated copper phthalocyanine, highly brominated copper phthalocyanine, highly chlorinated and brominated phthalocyanine and a mixture of these. These highly halogenated copper phthalocyanines are synthesized by a process using chlorosulfonic acid as a solvent as described in U.S. Patent 2,662,085, by a process using titanium tetrachloride as a solvent, by a process using titanium tetrachloride and aluminium chloride, by a process for halogenating copper phthalocyanine in a solid powder state as described in Japanese Laid-Open Patent Publication No. 16535/1979, by a process for cyclization and condensation of halogenated phthalimide, etc., as described in U.S. Patent 4,002,642 or the like.

Examples of the pigment dispersion of this invention are a coating composition, printing ink, etc.

The coating composition referred to in this invention comprises 0.1 to 15 % by weight of the pigment composition of this invention, 99.9 to 55 % by weight of a vehicle for the coating composition and 0 to 30 % by weight of other auxiliary and a loading pigment. The vehicle for the coating composition comprises 80 to 20 % by weight of an acrylic resin, alkyd resin, epoxy resin, chlorinated rubber, vinyl chloride, synthetic resin emulsion, silicone resin, water-soluble resin, polyurethane, polyester, melamine resin, urea resin or a mixture of these and 60 to 10 % by weight of a solvent such as a hydrocarbon, alcohol, ketone, ether alcohol, ether, ester or water.

A gravure ink is formed by mixing 3 to 20 % by weight of the pigment composition of this invention, 97 to 60 % by weight of a vehicle for the gravure ink and 0 to 20 % by weight of other auxiliary and a loading pigment. The vehicle for the gravure ink comprises 10 to 50 % by weight of a gum rosin, wood rosin, tall rosin, lime rosin, rosin ester, maleic acid resin, polyamide resin, vinyl resin, nitrocellulose, cellulose acetate, ethyl cellulose, ethylene-vinyl acetate copolymer resin, urethane resin, polyester resin, alkyd resin, gilsonite, dammar, shellac, or a mixture of these and 30 to 80 % by weight of a solvent such as a hydrocarbon, alcohol, ketone, ether alcohol, ether, ester or water.

An offset printing ink is formed by mixing 3 to 35 % by weight of the pigment composition of this invention, 97 to 45 % by weight of a vehicle for the offset printing ink and 0 to 20 % by weight of other auxiliary and a loading pigment. The vehicle for the offset printing ink comprises 20 to 50 % by weight of a rosin-modified phenolic resin, petroleum resin alkyd resin or resin prepared by modifying these resins with dry oil, 0 to 30 % by weight of a plant oil such as linseed oil, tung oil, soybean oil, or the like, and 10 to 60 % by weight of a solvent such as n-paraffin, isoparaffin, aromatic, naphthene, α-olefin, or the like.

In the pigment composition of this invention, the fluidity is improved by incorporating an inherently green halogenated aluminum phthalocyanine instead of incorporating a blue phthalocyanine derivative. Therefore, the pigment composition of this invention is free from the defect that it possesses a bluish tint.

Further, the pigment dispersion of this invention not only exhibits excellent fluidity derived from a decrease in structural viscosity but also has high gloss and high pigmenting power. Furthermore, the pigment dispersion of this invention is usable with each of a nonaqueous vehicle and an aqueous vehicle, and maintains the above effect in a wide viscosity range of the dispersion. Therefore, the pigment composition of this invention is usable widely in almost all coating compositions, printing inks, and the like.

### Examples

This invention will be explained further in detail by reference to the following Preparation Examples, Examples and Comparative Examples, in which "part" stands for "part by weight" and "%" for "% by weight".

### Preparation Example 1

128 Parts of phthalodinitrile, 37 parts of aluminum chloride and 1 part of ammonium molybdate were mixed in a mixing machine, and the resultant mixture was charged into a reactor. The mixture was allowed to react by heating it to 210°C, whereby a crude aluminum phthalocyanine was synthesized. Then, 200 parts of aluminum chloride and 40 parts of sodium chloride were heated to form a eutectic salt having a temperature of 170°C. And, 40 parts of the crude aluminum phthalocyanine, which was pulverized, was added, and a chlorine gas was introduced at a rate of 10 parts per hour for 10 hours. After the chlorination, a large amount of water was charged, the resultant mixture was filtered, and the remaining solid was washed with water, dried and pulverized to give 59 parts of a crude highly chlorinated aluminum phthalocyanine [R₁ in the formula (I) is -Cl].

The crude highly chlorinated aluminum phthalocyanine had an average chlorination ratio of 14.0 atoms.

### Preparation Example 2

200 Parts of aluminum chloride and 40 parts of sodium chloride were heated to form a eutectic salt having a temperature of 200°C. Then, 40 parts of a crude copper phthalocyanine was charged, and then, the mixture was cooled to 170°C. Bromine was introduced at a rate of 2 parts per hour for 60 hours, and further, a chlorine gas was introduced at a rate of 4 parts per hour for 8 hours. After the reaction of these was finished, a large amount of water was charged. And, the mixture was filtered, and the remaining solid was washed with water, dried and pulverized to give 55 parts of a crude highly chlorinated and brominated aluminum phthalocyanine-copper phthalocyanine mixture [R₁ in the formula (I) is -Cl].

The crude highly chlorinated and brominated aluminum phthalocyanine-copper phthalocyanine mixture had an aluminum substitution ratio of 29 %, a chlorination ratio of 8.2 atoms and a bromination ratio of 4.6 atoms.

### Preparation Example 3

60 Parts of a paste of a crude highly chlorinated aluminum phthalocyanine prepared in the same way as in Preparation Example 1 was dispersed in 800 parts of a 5 % NaOH aqueous solution, and the dispersion was stirred at 80°C for 1 hour. Then, the dispersion was filtered, and the remaining solid was washed with water, dried and pulverized [R₁ in the formula (I) is -OH].

### Preparation Example 4

10 Parts of a crude highly chlorinated aluminum phthalocyanine prepared in the same way as in Preparation Example 1 and 2 parts of p-chlorobenzene sulfonic acid were dissolved in 150 parts of 99% sulfuric acid, and the mixture was stirred at 50 °C for 2 hours. The reaction mixture was run into a large amount of water, the resultant mixture was filtered, and the remaining solid was washed with water, dried and pulverized [R₁ in the formula (I) is -SO₃C₆H₄Cl].

### Preparation Example 5

10 Parts of a crude highly chlorinated aluminum phthalocyanine prepared in the same way as in Preparation Example 1 and 2 parts of laurylbenzene sulfonic acid were dissolved in 150 parts of 99 % sulfuric acid, and the mixture was stirred at 50°C for 2 hours. The reaction mixture was run into a large amount of water, the resultant mixture was filtered, and the remaining solid was washed with water, dried and pulverized [R₁ in the formula (I) is -SO₃C₆H₄C₁₂H₂₅].

In order to evaluate the pigment composition of this invention, coating compositions and gravure inks having the following formulations were prepared.

### Formulation 1 (Oil coating composition)

| | |
|---|---|
| Pigment (pigment composition) | 7 parts |
| Alkyd resin varnish | 76 parts |
| Melamine resin varnish | 28 parts |
| Thinner | 12 parts |

### Formulation 2 (Water-soluble resin coating composition)

| | |
|---|---|
| Pigment (pigment composition) | 6 parts |
| Water-soluble acrylic resin varnish | 55 parts |
| Melamine resin varnish | 9 parts |
| Thinner | 30 parts |

### Formulation 3 (gravure ink)

| | |
|---|---|
| Pigment (pigment composition) | 10 parts |
| Polyamide · nitrocellulose varnish | 70 parts |
| Thinner | 20 parts |

In the following Examples and Comparative Examples, the above formulations were respectively charged into containers with steel balls or glass beads and dispersed with a paint shaker to form coating compositions and gravure inks.

Pigment compositions prepared in Examples and Comparative Examples were evaluated as follows.

### (1) Evaluation of fluidity

The viscosities of pigment dispersions prepared in Examples and Comparative Examples were measured by using a Brookfield viscometer at 6 rpm and 60 rpm.

### (2) Evaluation of gloss

The oil coating compositions were adjusted with a thinner so as to have a viscosity, measured with a Ford cup No. 4, of 23 seconds. And, they were sprayed onto tin-plated steel sheets and baked. The gravure inks were spread on a triacetate film by means of a bar coater. Then, the resultant films of the coating compositions or the gravure inks were measured for a gloss at 60 degrees by using a glossmeter.

### Comparative Example 1

800 Parts of titanium tetrachloride, 40 parts of a crude copper phthalocyanine and 37.2 parts of aluminum chloride (4 times by mole as large as the amount of phthalocyanine) were charged into a reactor. The temperature inside the reactor was elevated, with stirring, to 110-115°C over about 30 minutes, and this temperature was maintained for 3 hours with stirring continuously. Thereafter, the temperature was elevated to 135-137°C. And, a chlorine gas was introduced at a rate of 5 parts per hour for 25 hours, and titanium tetrachloride was distilled off. The distillation residue (magma) was treated with hydrochloric acid, and heated, with stirring, to 70-80°C to form a slurry. The slurry was filtered, and the remaining solid was washed with water and dried to give 72.3 parts of a highly chlorinated copper phthalocyanine having a green color. The highly chlorinated copper phthalocyanine had an average chlorination ratio, per copper phthalocyanine molecule, of 14.6 atoms. 100 Parts of the highly chlorinated copper phthalocyanine, 300 parts of sodium chloride and 140 parts of diethylene glycol were mixed in a kneader over 6 hours to give a pigment composition. The pigment composition was formulated into a coating composition as per Formulation 1. Table 1 shows the fluidity and gloss of the coating composition.

### Example 1

97 Parts of the same highly chlorinated copper phthalocyanine pigment composition as that obtained in Comparative Example 1 and 3 parts of the highly chlorinated aluminum phthalocyanine prepared in Preparation Example 1 were formulated into a coating composition as per Formulation 1. Table 1 shows the evaluation results of the coating composition, which had excellent fluidity and gloss over the coating composition obtained in Comparative Example 1.

### Examples 2-4

97 Parts of the same highly chlorinated copper phthalocyanine pigment composition as that obtained in Comparative Example 1 and 3 parts of the highly chlorinated aluminum phthalocyanine prepared in Preparation Example 3 (for Example 2), Preparation Example 4 (for Example 3) or Preparation Example 5 (for Example 4) were formulated into a coating composition as per Formulation 1. Table 1 shows the evaluation results of these coating compositions. All of the coating compositions had excellent fluidity and gloss over the coating composition obtained in Comparative Example 1.

### Comparative Example 2

3.0 Parts of copper phthalocyanine is mixed with 41 parts of chlorosulfonic acid while the resulting mixture was stirred. 5 Parts of sulfur monochloride and 0.3 part of iodine monochloride were added. A chlorine gas was bubbled through this mixture solution at 30°C. When the olive color of the starting solution changed to carmine red, the reaction mass was heated slowly to 90°C. The bubbling of the chlorine gas was stopped when a desired chlorination degree was obtained, as evidenced by drowning small batch samples into water on a porcelain plate and observing the degree of greenness of shade of the isolated product. Heating was continued for one hour, and the reaction mass was run slowly into 410 parts of cold water at room temperature, whereby a clean green chlorinated phthalocyanine pigment precipitated. The resultant mixture was filtered, and the remaining solid was washed with water and dried to give a crude highly chlorinated copper phthalocyanine containing 14.3 chlorine atoms per copper phthalocyanine molecule.

100 Parts of the crude highly chlorinated copper phthalocyanine was formed into a pigment composition in the same way as in Comparative Example 1, and the pigment composition was formulated into a coating composition as per Formulation 1.

### Example 5

89.6 Parts of a crude highly chlorinated copper phthalocyanine synthesized by using chlorosulfonic acid as a solvent and 10.4 parts of the crude highly chlorinated and brominated aluminum phthalocyanine-copper phthalocyanine mixture prepared in Preparation Example 2 (a mixture containing 3 parts of highly chlorinated and brominated aluminum phthalocyanine) were formed into a pigment composition in the same way as in Comparative Example 1, and the pigment composition was formulated into a coating composition as per Formulation 1. Table 1 shows the evaluation results of the coating composition, which had excellent fluidity and gloss over the coating composition obtained in Comparative Example 2.

### Comparative Example 3

150 Parts of a crude copper phthalocyanine and 1,500 parts of a sodium chloride powder were charged into a rotary furnace reactor, and a chlorine gas was introduced. At first, the copper phthalocyanine was chlorinated at 240°C for 3 hours. Then, 10 parts of an iron powder was added, and the reaction temperature was elevated at a rate of 10°C every 15 minutes while chlorine was introduced. And, when the reaction temperature became 280°C, the reaction was further continued for 1 hour. After the reaction was finished, the temperature was decreased, and the reaction mixture was run into water to separate sodium chloride. Then, the reaction product was washed with a 3 % hydrochloric acid water solution and a 3 % sodium hydroxide water solution to remove the catalyst and impurities, washed with water, and dried to give a yellowish green highly chlorinated copper phthalocyanine. Chlorine analysis showed that this highly chlorinated copper phthalocyanine had 15.0 chlorine atoms introduced per phthalocyanine molecule.

The highly chlorinated copper phthalocyanine was formed into a pigment composition in the same way as in Comparative Example 1, and the pigment composition was formulated into an aqueous coating composition as per Formulation 2. The fluidity of the aqueous coating composition was examined. Table 2 shows the result.

### Example 6

A pigment composition formed of 93 parts of the same pigment composition as that obtained in Comparative Example 3 and 7 parts of the pigment prepared in Preparation Example 1 was formulated into a coating composition as per Formulation 2.

Table 2 shows the evaluation result of the coating composition, which had excellent fluidity over the coating composition obtained in Comparative Example 3.

### Comparative Example 4

140 Parts of urea, 100 parts of tetrachlorophthalic anhydride and 16 parts of copper sulfate (II) in 800 parts of trichlorobenzene were heated to 85 to 90°C, While this temperature was maintained, a mixture of 6 parts of titanium tetrachloride with 20 parts of sulfuryl chloride was added dropwise. The resultant reaction mixture was stirred at 85 to 90°C for 1 hour, and then heated to 190°C over 3 hours. The reaction mixture was stirred at 190°C for 2 hours, and then cooled to 150°C. At this temperature, the reaction mixture was filtered with suction. The resultant crude highly chlorinated copper phthalocyanine was formed into a pigment composition in the same way as in Comparative Example 1. The pigment composition was formulated into a water-soluble coating composition as per Formulation 2, and the fluidity thereof was measured.

### Table 2 shows the result.

### Example 7

A pigment composition formed of 93 parts of the same pigment composition as that obtained in Comparative Example 4 and 7 parts of the pigment prepared in Preparation Example 1 was formulated into a coating composition as per Formulation 2.

Table 2 shows the evaluation result of the coating composition, which had excellent fluidity over the coating composition obtained in Comparative Example 4.

### Example 8

A pigment composition formed of 75.7 parts of the same pigment composition as that obtained in Comparative Example 4 and 23.1 parts of the pigment (containing 7 parts of highly chlorinated and brominated aluminum phthalocyanine) prepared in Preparation Example 2 was formulated into a coating composition as per Formulation 2.

Table 2 shows the evaluation result of the coating composition, which had excellent fluidity over the coating composition obtained in Comparative Example 4.

### Comparative Example 5

The same pigment composition as that obtained in Comparative Example 1 was formulated into a gravure ink as per Formulation 3.

Table 3 shows the evaluation results of the resultant gravure ink.

### Examples 9 and 10

A pigment composition formed of 96 parts of the same pigment composition obtained in Comparative Example 5 and 4 parts of the pigment prepared in Preparation Example 1 (for Example 9) or Preparation Example 4 (for Example 10) was formulated into a gravure ink as per Formulation 3.

Table 3 shows the evaluation results of the gravure inks obtained above.

Both these two gravure inks had excellent fluidity and excellent gloss over the gravure ink obtained in Comparative Example 5.

### Example 11

A pigment composition formed of 86.1 parts of the pigment composition obtained in Comparative Example 5 and 13.9 parts of the pigment (containing 4 parts of highly chlorinated and brominated aluminum phthalocyanine) prepared in Preparation Example 2 was formulated into a gravure ink as per Formulation 3.

Table 3 shows the evaluation results of the gravure ink, which had excellent fluidity and excellent gloss over the gravure ink obtained in Comparative Example 5.

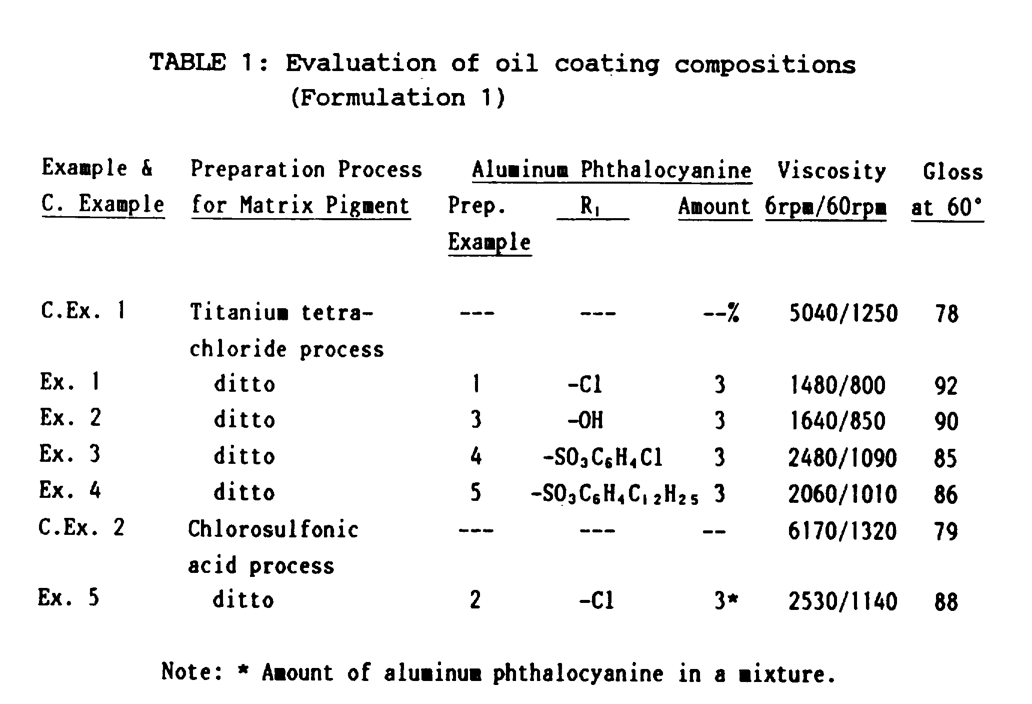

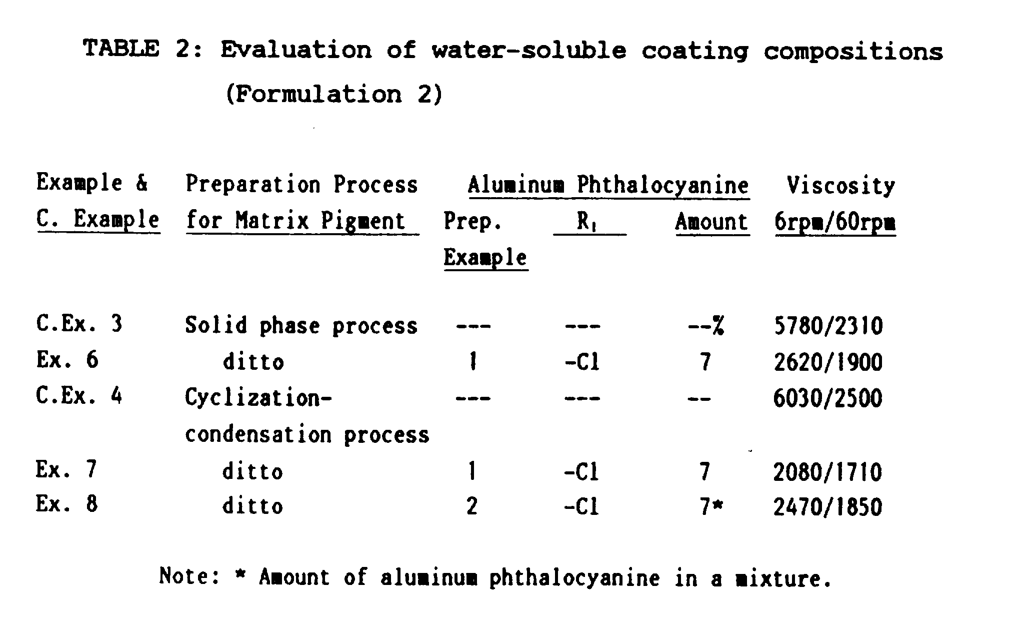

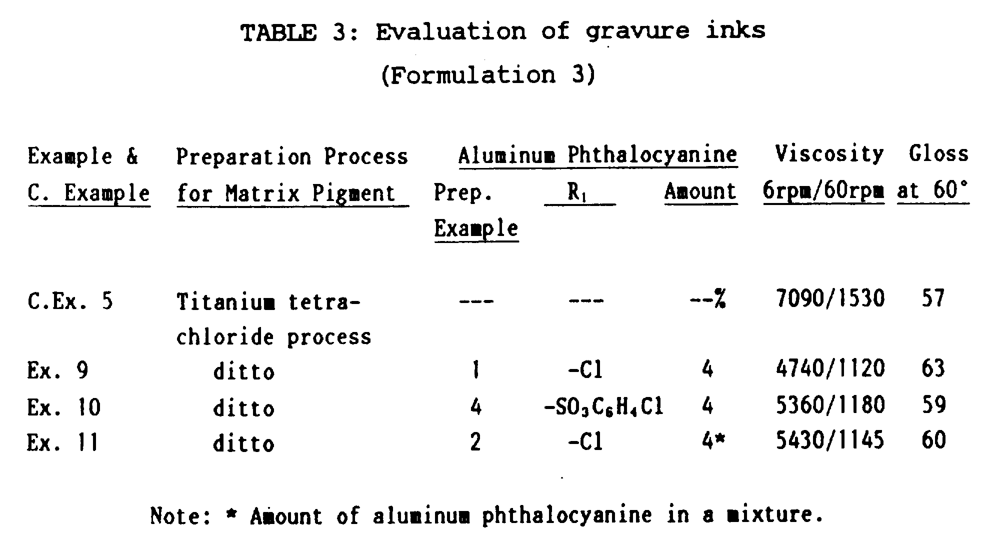

## Claims

1. A pigment composition comprising 100 parts by weight of at least one highly halogenated copper phthalocyanine selected from a highly halogenated copper phthalocyanine prepared by halogenation of copper phthalocyanine in a chlorosulfonic acid, titanium tetrachloride or a mixture of titanium tetrachloride with aluminium chloride, a highly halogenated copper phthalocyanine prepared by halogenation of copper phthalocyanine in a solid powder state and a highly halogenated copper phthalocyanine' prepared by a cyclization-condensation reaction, and 0.3 to 30 parts by weight of a highly halogenated aluminum phthalocyanine.

2. A composition according to claim 1, wherein the highly halogenated aluminum phthalocyanine is a compound represented by the following structural formula (I)
R₁-AℓPcXₙ (I)
wherein PcXₙ represents a halogenated phthalocyanine moiety in which X denotes a chlorine or bromine atom and n denotes an integer of from 8 to 16, and R₁ represents -Cl, -OH, -SO₃H or -SO₃C₆H₃(R₂)R₃ in which each of R₂ and R₃, independently of the other, denotes a hydrogen atom, an alkyl group having 1 to 18 carbon atoms, a nitro group, a sulfone group or a halogen atom.

3. A composition according to claim 1 or 2, wherein the highly halogenated copper phthalocyanine is at least one of a highly chlorinated copper phthalocyanine, a highly brominated copper phthalocyanine and a highly chlorinated and brominated copper phthalocyanine.

4. A composition according to claim 1, 2 or 3 wherein the highly halogenated copper phthalocyanine has not less than 8 halogen atoms in the phthalocyanine moiety.

5. A composition according to any one of the preceding claims wherein the highly halogenated aluminum phthalocyanine has not less than 8 halogen atoms in the phthalocyanine moiety.

6. A pigment dispersion of a pigment composition as claimed in any one of the preceding claims in a vehicle for a pigment.

7. A dispersion according to claim 6, wherein the vehicle is for a coating composition.

8. A dispersion according to claim 6, wherein the vehicle is for a gravure ink.

9. A dispersion according to claim 6, wherein the vehicle for an offset printing ink.

## Patentansprüche

1. Pigmentzusammensetzung, welche 100 Gewichtsanteile mindestens eines hochgradig halogenierten Kupferphthalocyanins, ausgewählt aus einem hochgradig halogenierten Kupferphthalocyanin, das durch Halogenierung eines Kupferphthalocyanins in einer Chlorsulfonsäure, Titantetrachlorid oder einem Gemisch von Titantetrachlorid und Aluminiumchlorid hergestellt wird, oder einem hochgradig halogenierten Kupferphthalocyanin, das durch Halogenierung eines Kupferphthalocyanins in einem Festpulverzustand hergestellt wird und einem hochgradig halogenierten Kupferphthalocyanin, das durch eine Cyclisations-Kondensationsreaktion hergestellt wird, und 0,3 bis 30 Gewichtsanteile eines hochgradig halogenierten Aluminiumphthalocyanins umfaßt.

2. Zusammensetzung nach Anspruch 1, worin das hochgradig halogenierte Aluminiumphthalocyanin eine Verbindung ist, die dargestellt ist durch die folgende Strukturformel (I)
R₁-AlPcXₙ (I),
worin PcXₙ für eine halogenierte Phthalocyanin-Komponente steht, in welcher X ein Chlor- oder Bromatom kennzeichnet und n eine ganze Zahl von 8 bis 16 kennzeichnet, und R₁ für -Cl, -OH, -SO₃H oder -SO₃C₆H₃(R₂)R₃ steht, worin R₂ und R₃ jeweils unabhängig voneinander ein Wasserstoffatom, eine Alkylgruppe mit 1 bis 18 Kohlenstoffatomen, eine Nitrogruppe, eine Sulfongruppe oder ein Halogenatom kennzeichnen.

3. Zusammensetzung nach Anspruch 1 oder 2, worin das hochgradig halogenierte Kupferphthlocyanin mindestens eines aus einem hochgradig halogenierten Kupferphthalocyanin, einem hochgradig bromierten Kupferphthalocyanin und einem hochgradig chlorierten und bromierten Kupferphthalocyanin ist.

4. Zusammensetzung nach Anspruch 1, 2 oder 3, worin das hochgradig halogenierte Kupferphthalocyanin nicht weniger als 8 Halogenatome in der Phthalocyanin-Komponente aufweist.

5. Zusammensetzung nach einem der vorangegangenen Ansprüche, worin das hochgradig halogenierte Aluminiumphthalocyanin nicht weniger als 8 Halogenatome in der Phthalocyanin-Komponente aufweist.

6. Pigmentdispersion einer Pigmentzusammensetzung nach einem der vorangegangenen Ansprüche in einem Träger für ein Pigment.

7. Dispersion nach Anspruch 6, worin der Träger für eine Beschichtungszusammensetzung ist.

8. Dispersion nach Anspruch 6, worin der Träger für eine Tiefdruckfarbe ist.

9. Dispersion nach Anspruch 6, worin der Träger für eine Offset-Druckfarbe ist.

## Revendications

1. Une composition pigmentaire comprenant 100 parties en poids d'au moins une phtalocyanine de cuivre fortement halogénée sélectionnée parmi une phtalocyanine de cuivre fortement halogénée préparée par halogénation de phtalocyanine de cuivre dans un acide chlorosulfonique, du tétrachlorure de titane ou un mélange de tétrachlorure de titane et de chlorure d'aluminium, une phtalocyanine de cuivre fortement halogénée par halogénation de phtalocyanine de cuivre à l'état de poudre solide et une phtalocyanine de cuivre fortement halogénée préparée par une réaction de cyclisation-condensation, et 0,3 à 30 parties en poids d'une phtalocyanine d'aluminium fortement halogénée.

2. Une composition selon la revendication 1, dans laquelle la phtalocyanine d'aluminium fortement halogénée est un composé représenté par la formule développée (I) suivante :
R1 - AℓPcXn (I)
dans laquelle PcXn représsente une portion de phtalocyanine halogénée où X indique un atome de chlore ou de brome et n un nombre entier de 8 à 16, et R1 représente -Cl, -OH, -S03H ou -S03C6H3(R2)R3 où R2 et R3 indiquent chacun, indépendamment de l'autre, un atome d'hydrogène, un groupe alcoyle ayant 1 à 18 atomes de carbone, un groupe nitro, un groupe sulfone ou un atome d'halogène.

3. Une composition selon la revendication 1 ou 2, dans laquelle la phtalocyanine de cuivre fortement halogénée est au moins une phtalocyanine du groupe constitué par une phtalocyanine de cuivre fortement chlorée, une phtalocyanine de cuivre fortement bromée et une phtalocyanine de cuivre fortement chlorée et bromée.

4. Une composition selon la revendication 1, 2 ou 3 dans laquelle la phtalocyanine de cuivre fortement halogénée a au moins 8 atomes d'halogène dans la portion de phtalocyanine.

5. Une composition selon l'une ou l'autre des revendications qui précédent dans laquelle la phtalocyanine d'aluminium fortement halogénée a au moins 8 atomes d'halogène dans la portion de phtalocyanine.

6. Une dispersion pigmentaire d'une composition pigmentaire selon l'une ou l'autre des revendications qui précédent dans un véhicule pour un pigment.

7. Une dispersion selon la revendication 6, dans laquelle le véhicule est destiné à une composition de revêtement.

8. Une dispersion selon la revendication 6, dans laquelle le véhicule le véhicule est destiné à une encre de gravure.

9. Une dispersion selon la revendication 6, dans laquelle le véhicule est destiné à une encre d'imprimerie offset.
